# EUROPÄISCHE PATENTSCHRIFT

(11) **EP 2 676 819 B1**
(45) Veröffentlichungstag und Bekanntmachung des Hinweises auf die Patenterteilung: **13.08.2014**
(21) Anmeldenummer: 13185190.9
(22) Anmeldetag: 01.12.2011
(51) Int. Cl.: B60C 23/04, B29C 73/22, B60C 19/12

(54) **Anordnung einer Reifendruck-Sensoreinheit**
Arrangement of a tire pressure sensor unit
Agencement d'une unité de captage de pression de gonflage de pneumatique

(30) Priorität: 25.01.2011 DE 102011003134
(43) Veröffentlichungstag der Anmeldung: 25.12.2013
(62) Teilanmeldung aus: 11799651.2
(73) Patentinhaber: Bayerische Motoren Werke Aktiengesellschaft, 80809 München (DE)
(72) Erfinder: Dr.Hartmann, Jochen, 86415 Mering (DE); Schwab, Axel, 80538 München (DE); Meier, Michael, 85540 Haar (DE)

(56) Entgegenhaltungen:
- WO-A1-2011/060986
- DE-A1-102007 060 861
- US-A1- 2006 196 257
- US-B2- 7 271 709

## Beschreibung

Die Erfindung betrifft die Anordnung einer Reifendruck-Sensoreinheit an der Innenwand der Lauffläche eines Fahrzeug-Reifens in einer mit dieser Innenwand verbundenen Haltevorrichtung für die Sensoreinheit. Zum Stand der Technik wird neben der DE 10 2009 006 707 A1 und der DE 10 2008 053 506 A1 insbesondere auf die DE 10 2007 060 861 A1 verwiesen.

Sensoreinheiten zur Überwachung des Reifendrucks sollen zuverlässig einen Druckverlust in einem Fahrzeug-Reifen aufzeigen, und zwar insbesondere auch dann, wenn die Lauffläche des Reifens von einem Gegenstand wie einem Nagel oder dergleichen durchstoßen wird. Dabei sollte im Falle einer solchen Beschädigung des Reifens das mit diesem Reifen ausgerüstete Fahrzeug noch einigermaßen sicher über eine gewisse Wegstrecke bewegt werden können, wofür ein an den Fahrer gerichteter Hinweis auf einen Druckverlust sehr hilfreich ist. Grundsätzlich bekannt sind dabei fest installierte Reifendruck-Sensoreinheiten und solche, die in einer am Reifen vorgesehenen und üblicherweise aus einem Gummimaterial bestehende Haltevorrichtung eingesetzt sind und aus dieser unter Einsatz höherer Kräfte wieder entfernbar sind. Bekannt ist ferner, dass solche Sensoreinheiten entweder mit einer langlebigen Batterie zur Bereitstellung der für die Funktion der Sensoreinheit benötigten Energie und/oder mit einer Vorrichtung zur Erzeugung von elektrischer Energie ausgerüstet sind, wobei letztere üblicherweise die Energie aus dem Reifenlatsch-Durchlauf gewinnen, d.h. aus der Verformung des rotierenden Reifens im Bereich der jeweiligen Radaufstandsfläche.

Die vorliegende Erfindung befasst sich nun mit in einer Haltevorrichtung aufgenommenen Sensoreinheiten, wobei die Haltevorrichtung einen mit der Reifeninnenwand verbundenen geschlossenen Bodenabschnitt aufweisen kann, welche im an späterer Stelle als figürlich dargestelltes Ausführungsbeispiel noch weiter erläutert wird, oder demgegenüber vereinfacht, nämlich ohne einen geschlossenen Bodenabschnitt gestaltet sein kann. Mit einem hier sog. geschlossenen Bodenabschnitt stellt sich die Haltevorrichtung quasi als zur Innenwand der Reifen-Lauffläche hin geschlossene Schachtel oder als Korb mit einem Boden dar, die die Sensoreinheit aufnimmt und wobei dieser Boden üblicherweise vollflächig mit der Innenseite des Reifens bzw. von dessen Lauffläche verbunden, insbesondere verklebt oder anvulkanisiert ist. Alternativ kann die Haltevorrichtung im wesentlichen nur durch Seitenwände oder Stützen oder dergleichen ohne Bodenabschnitt gebildet sein, wobei die Seitenwände oder Stützen an die Reifen-Innenseite angebracht sind und die Sensoreinheit im wesentlichen an der Reifen-Innenwand anliegend gehalten ist. In diesem Fall kann die Haltevorrichtung aus einem beliebigen Material bestehen, sofern dieses sicher mit dem Reifen verbindbar ist.

Eine in einer Haltevorrichtung gehaltene und aus dieser entfernbare Sensoreinheit kann grundsätzlich in einen anderen Reifen eingebaut und somit weiter oder wieder verwendet werden, jedoch sollte dann, wenn in dieser Sensoreinheit spezifische Daten aus der Vergangenheit, d.h. aus dem Einsatz im vorherigen Reifen resultierende Daten gespeichert sind, ausgeschlossen werden, dass diese Daten weiter verwendet werden, so wie dies grundsätzlich in der eingangs genannten DE 10 2007 060 861 beschrieben ist. Bei diesem bekannten Stand der Technik wird von der Sensoreinheit der Reifendruck periodisch gemessen und es wird dann, wenn ein plötzlicher Druckabfall ab Umgebungsdruck festgestellt wird, auf einen Austausch der Sensoreinheit geschlossen.

In der Erkenntnis, dass ein Druckabfall auf Umgebungsdruck alleine kein 10%iges Indiz für eine Demontage eines Reifens von einer Felge ist und somit nicht zwangsläufig einen Hinweis auf die Möglichkeit eines Ausbaus der Sensoreinheit darstellen muss, soll hiermit eine weitere günstige Möglichkeit aufgezeigt werden, wie in der Sensoreinheit bzw. in deren Steuerelektronik selbst registriert werden kann, dass mit hoher Wahrscheinlichkeit ein Reifen-Wechsel durchgeführt wurde, d.h. dass entweder diese Sensoreinheit in einem anderen Reifen oder ein Reifen mit dieser Sensoreinheit auf einer anderen Felge montiert wurde (= Aufgabe der Erfindung).

Die Lösung dieser Aufgabe ist für eine Anordnung einer Reifendruck-Sensoreinheit nach dem Oberbegriff des Anspruchs 1 **dadurch** gekennzeichnet, **dass** die Sensoreinheit zusätzlich einen Lichtsensor aufweist, mittels dessen aus einem Lichteinfall auf die Sensoreinheit, der zeitlich nach einer von der Sensoreinheit registrierter Inbetriebnahme festgestellt wird, auf einen Reifen-Wechsel geschlossen wird, wonach zumindest einige der in der Sensoreinheit bereits gespeicherten Daten für eine Weiterverwendung gesperrt werden.

Weiterhin kann in der Sensoreinheit ein Überprüfungsmodus vorgesehen sein, ob im Falle eines gemessenen Drucks, der im Bereich des Umgebung-Luftdrucks liegt, mit dem in üblichen Reifendruck-Sensoreinheiten vorgesehenen Beschleunigungssensor eine Beschleunigung registriert wird, anhand derer auf einen liegenden Reifen und folglich auf einen Einbau dieser Sensoreinheit in einen anderen Reifen geschlossen wird, wonach zumindest einige der in der Sensoreinheit bereits gespeicherten Daten für eine Weiterverwendung gesperrt werden.

Schließlich kann vorgesehen sein, dass die Sensoreinheit mit einer anderen im Reifen angeordneten Einheit, beispielsweise einer Antenne, elektrisch verbunden sein muss, wobei diese elektrische Verbindung über zumindest eine in der Lauffläche im Bereich innerhalb der genannten Haltevorrichtung versehene elektrische Kontaktstelle erfolgt. Wenn mehrere elektrische Kontaktstellen von der Sensoreinheit zu verschiedenen im Reifen angeordneten Einheiten benötigt werden, so empfiehlt es sich, diese elektrischen Kontaktstellen solchermaßen auszubilden und/oder anzuordnen, dass bei der Montage der entsprechend angepasst gestalteten Sensoreinheit deren Lage-Orientierung zum Reifen sichtbar ist.

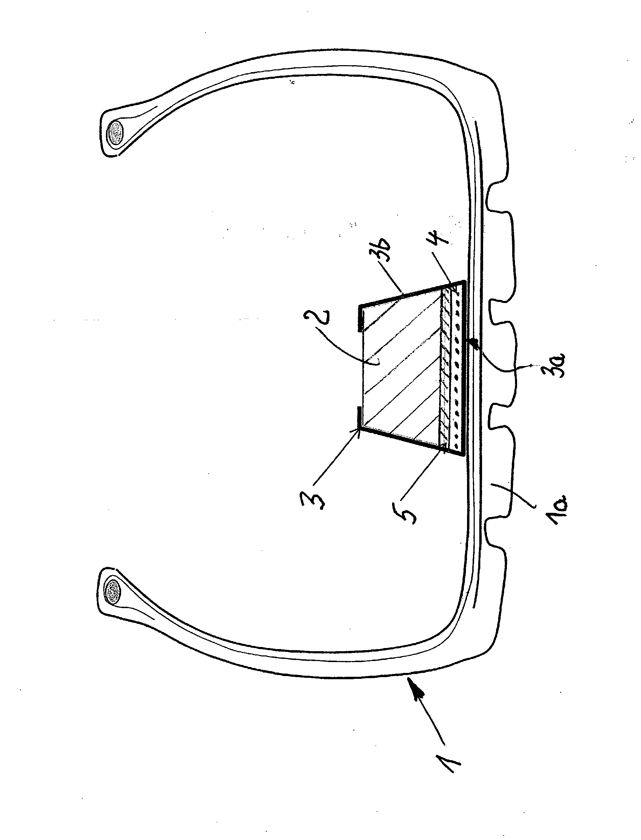

Die beigefügte einzige Figur zeigt einen Teil-Querschnitt eines Fahrzeug-Reifens (1) mit einer erfindungsgemäßen Reifendruck-Sensoreinheit (2), die in einer an die Innenseite der Lauffläche (1a) des Reifens (1) angeklebte oder anvulkanisierte Haltevorrichtung (3) eingesetzt ist. Diese aus einem Gummimaterial bestehende Haltevorrichtung (3) weist einen Bodenabschnitt (3a) auf, der vollflächig mit der Innenseite der Reifen-Lauffläche (1a) verbunden (verklebt oder anvulkanisiert) ist und ferner von dieser abgehende Seitenwände (3b), die ausgebildet sind, die Sensoreinheit (2) zwischen sich aufzunehmen und in der Haltevorrichtung (3) zu halten, was aufgrund der Elastizität des Gummimaterials einfach möglich ist. Auf die der Sensoreinheit (2) zugewandte Seite des Bodenabschnitts (3a) der Haltevorrichtung (3) ist eine Dichtmasse (4) aufgebracht, die in diesem Bereich im Falle eines Durchstichs eines Fremdkörpers durch die Lauffläche (1a) bzw. durch die Reifen-Innenwand und durch den Bodenabschnitt (3a) das hierbei entstehende Loch zumindest annähernd dicht verschließt. Als zusätzliche, jedoch nicht unbedingt notwendige weitere Maßnahme zum Schutz der Sensoreinheit (2) im Falle eines Reifen-Durchstichs im Bereich dieser Sensoreinheit (2) ist unterhalb von deren der Lauffläche (1a) zugewandten Seite eine Schicht von einem einen Durchstich hemmenden oder gleitfähigem Material (5) vorgesehen. Figürlich nicht dargestellt ist ein erfindungsgemäß an der Sensoreinheit (2) vorgesehener Lichtsensor.

## Patentansprüche

1. Anordnung einer Reifendruck-Sensoreinheit (2) an der Innenwand der Lauffläche (1a) eines Fahrzeug-Reifens (1) in einer mit dieser Innenwand verbundenen Haltevorrichtung (3) für die Sensoreinheit (2), **dadurch gekennzeichnet, dass** die Sensoreinheit zusätzlich einen Lichtsensor aufweist, mittels dessen aus einem Lichteinfall auf die Sensoreinheit, der zeitlich nach einer von der Sensoreinheit registrierter Inbetriebnahme festgestellt wird, auf einen Einbau dieser Sensoreinheit in einen anderen Reifen geschlossen wird, wonach zumindest einige der in der Sensoreinheit bereits gespeicherten Daten für eine Weiterverwendung gesperrt werden.

2. Anordnung einer Reifendruck-Sensoreinheit nach Anspruch 1, wobei in der Sensoreinheit ein Überprüfungsmodus vorgesehen ist, ob im Falle eines gemessenen Drucks, der im Bereich des Umgebung-Luftdrucks liegt, eine Beschleunigung registriert wird, anhand derer auf einen liegenden Reifen und folglich auf einen Einbau dieser Sensoreinheit in einen anderen Reifen geschlossen wird, wonach zumindest einige der in der Sensoreinheit bereits gespeicherten Daten für eine Weiterverwendung gesperrt werden.

3. Anordnung einer Reifendruck-Sensoreinheit nach Anspruch 1 oder 2, wobei mehrere elektrische Kontaktstellen solchermaßen ausgebildet und angeordnet sind, dass für die Montage der entsprechend gestalteten Sensoreinheit deren Lage-Orientierung zum Reifen sichtbar ist.

## Claims

1. An arrangement of a tyre pressure sensor unit (2) on the inner wall of the tread (1 a) of a vehicle tyre (1) in a holding device (3), which is connected to this inner wall, for the sensor unit (2), **characterised in that** the sensor unit additionally has a light sensor, by means of which from an incidence of light on the sensor unit, which is determined after a start-up recorded by the sensor unit in terms of time, an installation of this sensor unit in another tyre is indicated, whereupon at least some of the data already stored in the sensor unit are blocked for further use.

2. An arrangement of a tyre pressure sensor unit according to claim 1, wherein in the sensor unit, a checking mode is provided for whether, in the case of a measured pressure, which is in the region of the ambient air pressure, an acceleration is recorded, with the aid of which a horizontally arranged tyre and consequently an installation of this sensor unit in another tyre is indicated, whereupon at least some of the data already stored in the sensor unit are blocked for further use.

3. An arrangement of a tyre pressure sensor unit according to claim 1 or 2, wherein a plurality of electrical contact points are configured and arranged in such a way that for installation of the correspondingly formed sensor unit, its positional orientation with respect to the tyre is visible.

## Revendications

1. Agencement d'une unité de détection (2) de la pression d'un pneumatique monté sur la paroi interne de la surface de roulement (1a) d'un pneumatique (1) de véhicule dans un dispositif de retenue (3) de cette unité de détection (2) reliée à cette paroi interne,
**caractérisé en ce que**
l'unité de détection comporte en outre un capteur de lumière au moyen duquel, à partir de l'incidence de lumière sur l'unité de détection qui est constatée dans le temps après une mise en fonctionnement enregistrée par l'unité de détection, on conclut à un montage de cette unité de détection dans un autre pneumatique, au moins certaines des données déjà enregistrées dans l'unité de détection étant bloquées pour une utilisation ultérieure.

2. Agencement d'une unité de détection de la pression d'un pneumatique conforme à la revendication 1, dans lequel dans l'unité de détection il est prévu un mode de contrôle permettant de déterminer si, dans le cas d'une pression mesurée qui est située dans la plage de la pression de l'air environnant, une accélération est enregistrée à partir de laquelle on conclut à un pneumatique à plat et par suite au montage de cette unité de détection dans un autre pneumatique, au moins certaines des données déjà enregistrées dans l'unité de capteur étant bloquées pour une autre utilisation ultérieure.

3. Agencement d'une unité de détection de la pression d'un pneumatique conforme à la revendication 1 ou 2, dans lequel plusieurs points de contact électriques sont réalisés et positionnés de sorte que, pour le montage de l'unité de détection conformée de façon correspondante, l'orientation de leur position par rapport au pneumatique soit visible.
